Europäisches Patentamt

European Patent Office

Office européen des brevets

(19)

(11) Veröffentlichungsnummer : **0 220 130
B1**

(12) **EUROPÄISCHE PATENTSCHRIFT**

(45) Veröffentlichungstag der Patentschrift :
28.03.90

(21) Anmeldenummer : 86810365.6

(22) Anmeldetag : 18.08.86

(51) Int. Cl.$^5$ : **C 09 B 41/00**, G 01 N 21/35

(54) Verfahren zur Bestimmung der Diazonium-Ionenkonzentration.

(30) Priorität : 22.08.85 CH 3604/85

(43) Veröffentlichungstag der Anmeldung :
29.04.87 Patentblatt 87/18

(45) Bekanntmachung des Hinweises auf die Patenterteilung : 28.03.90 Patentblatt 90/13

(84) Benannte Vertragsstaaten :
BE CH DE FR GB IT LI NL

(56) Entgegenhaltungen :
CH-A- 618 456
CH-A- 654 846
US-A- 4 190 578

(73) Patentinhaber : CIBA-GEIGY AG
Klybeckstrasse 141
CH-4002 Basel (CH)

(72) Erfinder : Rakoczi, Ferenc, Dr.
Grünauring 20/125
CH-8064 Zürich (CH)
Erfinder : Oxenius, Rüdiger, Dr.
Brunnenweg 15
D-7888 Rheinfelden (DE)

## Beschreibung

Die Erfindung betrifft ein Verfahren zur Bestimmung der Diazonium-Ionenkonzentration in Diazotierungslösungen und/oder bei der Azokupplung mit Hilfe der Infrarotspektroscopie (IR-Spektroscopie).

In den letzten Jahren ist man zunehmend bestrebt, die Farbstoffherstellung zu automatisieren und zwar sowohl was den Herstellungsprozess anbetrifft, als auch hinsichtlich der Aufarbeitung. In Bezug auf den Herstellungsprozess einer der wichtigsten Farbstoffklassen, der Azofarbstoffe, besteht nach wie vor ein Bedarf an einfachen Methoden zur Ueberwachung der beiden wesentlichen Syntheseschritte, nämlich der Diazotierungsreaktion und der Kupplungsreaktion. Beiden Reaktionen gemeinsam ist eine Veränderung der Diazonium-Ionenkonzentration während des Reaktionsverlaufs. Eine Kontrolle der Diazotierung wie auch der Kupplung sollte daher über die Erfassung der Diazonium-Ionenkonzentration möglich sein.

Gefunden wurde, dass sich dies auf einfache und elegante Weise durch IR-spektroskopische Analyse der entsprechenden Reaktionsgemische realisieren lässt. Die —$N_2^+$ Gruppe der Diazoniumsalze gibt sich im Infrarotspektrum durch eine starke Bande in einem Wellenzahlenbereich von $\tilde{v} = 2\,150$ bis $2\,350$ cm$^{-1}$ zu erkennen, wobei die Intensität dieser Bande eine Funktion der Diazonium-Ionenkonzentration ist.

Gegenstand der vorliegenden Erfindung ist somit ein Verfahren zur Bestimmung und Steuerung der Diazonium-Ionenkonzentration in Diazotierungslosungen und/oder bei der Azokupplung das dadurch gekennzeichnet ist, dass man die Diazonium-Ionenkonzentration IR-spektroskopisch über die Intensität der N≡N Valenzschwingung erfasst.

Die IR-spektroskopische Messung kann dabei so durchgeführt werden, dass man während der Diazotierung bzw. Kupplung in bestimmten Zeitabständen Proben entnimmt und diese im entsprechenden Wellenzahlbereich spektroskopisch untersucht oder geringe Mengen der Diazotierungslösung bzw. Kupplungssuspension über einen by-pass kontinuierlich in eine Durchflusszelle strömen lässt und die Intensität der N≡N-Valenzschwingung laufend registriert. Von beiden Methoden wird die kontinuierliche Messung bevorzugt durchgeführt, da diese eine sofortige Beeinflussung der Reaktandenströme, auch bei geringfügigen Konzentrationsänderungen, ermöglicht. Liegt eine Suspension vor, was bei der Azokupplung vielfach der Fäll ist so erweist es sich als vorteilhaft, vor der IR-Messung eine Filtration durchzuführen, z. B. so, dass man einen Teilstrom der Suspension einer kontinuierlichen Klärfiltration unterwirft und das Filtrat IR-spektroskopisch analysiert. Auf diese Weise arbeitet man stets in homogener Phase und das Messergebnis kann nicht durch den Feststoffanteil beeinflusst werden. Die Klärfiltration geschieht vorteilhaft mit Hilfe einer Membrantrennmethode, wie z. B. der Mikrofiltration, Ultrafiltration oder Hyperfiltration.

Bei der Diazotierung wird man über die Intensität der N≡N-Valenzschwingung zweckmässigerweise die Nitrit- oder Aminzufuhr steuern, d. h. wenn das Signal der N≡N-Valenzschwingung einen durch Vorversuche ermittelten Sollwert erreicht hat, wird die Nitrit- bzw. Aminzufuhr entsprechend korrigiert. Auf diese Weise kann man eine Ueberdosierung an Nitrit vermeiden und auch während der Diazotierung die Nitritmenge so steuern, dass es zu keinen unerwünschten Nebenreaktionen kommt.

Die Diazotierung wird üblicherweise in mineralsaurer Lösung durchgeführt und zwar kontinuierlich oder diskontinuierlich. Bei diskontinuierlicher Arbeitsweise wird das Amin z. B. in wässriger Salzsäure angeschlämmt oder gelöst und anschliessend mit wässriger Nitritlösung, z. B. wässriger Natriumnitritlösung, versetzt. Die Reaktion verläuft praktisch quantitativ.

Bei der bevorzugten kontinuierlichen Arbeitsweise geht man beispielsweise so vor, dass man die Diazokomponente in einem Rohrreaktor kontinuierlich mit Natriumnitrit diazotiert und die Lösung in einen Rührkessel leitet. Gleichzeitig erfolgt die Messung der Intensität der N≡N-Valenzschwingung mittels eines IR-Spektrophotometers. Die mit Hilfe des IR-Spektrophotometers gemessenen Intensitätsschwankungen werden von einem Prozessrechner verarbeitet, der nach Vergleich mit dem Sollwert über ein entsprechendes Signal die Reaktandenströme steuert.

Das erfindungsgemässe Verfahren ist auf alle diazotierbaren Amine anwendbar. Vorzugsweise wird das Verfahren zur Bestimmung und Steuerung der Diazonium-Ionenkonzentration in Diazotierungslosungen und/oder bei der Azokupplung in Gegenwart polarer Lösungsmittel, wie z. B. Wasser, Alkohole, wie Methanol, Aethanol, Propanol, Isopropanol oder Butanol, oder Ketonen, wie z. B. Methylisopropylketon, angewendet. Besonders bevorzugt ist die Bestimmung und Steuerung der Diazoniumionenkonzentration in wässriger Lösung.

Als Diazokomponenten sind z. B. die folgenden geeignet: Anilin und Derivate des Anilins, wie 4-Nitroanilin, 3-Nitroanilin, 2-Chlor-4-nitroanilin, 4-Chlor-2-nitroanilin, 2,6-Dichlor-4-nitroanilin, 4-Aminoacetanilid, 2,4-Dinitroanilin, 4-Chloranilin, 2,4,5-Trichloranilin, 2,5-Dimethoxyanilin, o-Anisidin, p-Anisidin, o-Phenetidin, o-Toluidin, p-Toluidin, 4-Nitro-2-aminoanisol, 2-Nitro-4-aminoanisol, p-Phenoxyanilin, oder auch 4-Methylsulfonylanilin, 4-Amino-2,4-dichlorbenzophenon, 4'-Amino-2,4-dinitrobenzophenon, 2-Nitroanilin, 2-Chlor-4,6-dinitroanilin, 2,5-Dichloranilin, 3,3'-Dichlorbenzidin, 5-Nitro-2-aminoanisol, 3-Nitro-4-aminotoluol, 2,4-Dichloranilin, 3-Nitro-4-aminoanisol, 2-Aminoanisol-4-sulfodiethylamid, 5-Chlor-2-aminotoluol, 4-Chlor-2-aminotoluol, 4-Nitro-2-aminotoluol, 5-Nitro-2-aminotoluol, 4-Nitro-2-aminoa- nisol, 3,3'-Dimethoxybenzidin, 3,3'-Dimethoxy-6,6'-dichlorbenzidin, 2-Amino-4-chlorphenol, 2-Aminophenol-4-sulfamid, 2-Aminophenol-5-sulfamid, 2-Aminophenol-4-sulfomethylamid, 3-Amino-4-hydroxyphenylmethylsulfon, 2-Amino-5-nitrophenylmethylsulfon, 4-Amino-3-nitrophenylmethylsulfon, 2-(N-Methyl-N-cyclohexylsulfonamido)-anilin, 2-Amino-4,2',4'-trichlordiphenyläther sowie 4-Aminoazobenzol ; α- oder β-Naphthylamin, sowie deren Derivate, wie z. B. 2-Naphthylamin-6,8-disulfonsäure, 1-Naphthylamin-3,6,8-trisulfonsäure, 4-Naphthylamino-5-hydroxy-1,7-disulfonsäure oder 2-Naphthylamino-7-hydroxy-6-sulfonsäure.

Ferner heterocyclische Amine z. B. 3-Amino-1,2,4-triazol, 2-Aminothiazol, Benzthiazole wie 2-Aminobenzthiazol, 2-Amino-4-chlorbenzthiazol, 2-Amino-4-cyanbenzthiazol, 2-Amino-4,6-dinitrobenzthiazol, 2-Amino-4-methoxy-6-nitrobenzthiazol, 2-Amino-6-methoxy-1,3-benzothiazol oder Aminobenztriazole, die ebenfalls entsprechend substituiert sein können.

Die Diazoniumsalzlösung kann in einem Vorratsbehälter gelagert oder ohne Zwischenlagerung mit einer geeigneten Kupplungskomponente zum Azofarbstoff umgesetzt werden. Auch die Azokupplung kann kontinuierlich oder diskontinuierlich durchgeführt werden. Bei kontinuierlicher Verfahrensführung bedient man sich vorteilhaft eines Rohrreaktors oder eines Mehrkammerreaktors. Ein derartiger Reaktor kann an einer oder mehreren Stellen mit einer Probeentnahmevorrichtung versehen sein.

Die Probeentnahme kann wiederum in bestimmten Zeitabständen oder zweckmässigerweise kontinuierlich erfolgen. Die Intensität der N=N-Valenzschwingung wird hier als Regelgrösse zur Steuerung der Dosiergeschwindigkeit der Diazokomponente bzw. der Kupplungskomponente verwendet ; oder anders ausgedrückt, es wird das Verhältnis von Diazo- zu Kupplungskomponente auf diese Weise überprüft und bei Bedarf neu eingestellt. Es lässt sich so eine praktisch quantitative Umsetzung der Ausgangskomponenten zum gewünschten Azofarbstoff erreichen. Nebenreaktionen lassen sich so auf ein Minimum reduzieren und man erhält einen typkonformen Farbstoff.

Die Azokupplung wird in Abhängigkeit von der Diazo- bzw. Kupplungskomponente in einem sauren oder basischen Reaktionsmedium durchgeführt, gegebenenfalls unter Zusatz von oberflächenaktiven Mitteln, wenn es darum geht, eine möglichst feinteilige Farbstoffdispersion zu erhalten. Neben den bereits genannten, als Diazokomponente verwendbaren Aminen, sind als Kupplungskomponenten z. B. die folgenden Verbindungen geeignet : N-substituierte Aniline, wie z. B. N,N-Dimethylanilin, N,N-Di-(β-carbomethoxyäthyl)-anilin, N-(γ-Methoxypropyl)-3-acetylaminoanilin, N,N-Di-(β-hydroxyäthyl) 2,5-dimethoxyanilin, N-Aethyl-N-(β-hydroxyäthyl)-anilin, N,N-Di-(β-hydroxyäthyl)-anilin ; ferner Phenol und substituierte Phenole wie o-, m-, P-Kresol, Resorcinol, 4-Phenylazo-1,3-dihydroxybenzol und 3-Acetylaminophenol, Naphthole, wie 1- oder 2-Naphthol, 6-Brom-2-naphthol, 4-Methoxy-1-naphthol und 2-Naphthol-6-sulfonamid ; oder auch Acylacetoarylamide, 2,6-Dihydroxypyridine oder 5-Pyrazolone.

Grundsätzlich kann man die Intensität der N≡N-Valenzschwingung sowohl zur Steuerung der Einzelreaktionen, d. h. der Diazotierung oder Kupplung, als auch zur Ueberwachung beider Reaktionen heranziehen.

Durchgeführt wird die IR-spektroskopische Analyse mit handelsüblichen IR-Spektrophotometern. Als Fenstermaterial verwendet man üblicherweise Platten aus anorganischen Salzen, die IR-durchlässig sind, wie z. B. Platten aus Calciumfluorid. Zur Kompensation der Energieabsorption und der Reflexionsverluste der Messküvette bringt man in den Referenzstrahlengang des Spektrophotometers üblicherweise ein Kompensationsfenster. Die Verarbeitung der im N≡N-Valenzschwingungsbereich gemessenen Intensitätsschwankungen kann direkt on-line mit einem Prozessrechner erfolgen, der dann den Komponentenfluss steuert.

Zu beachten ist, dass C-C Dreifachbindungen, die Cyanidgruppe und die Isocyanatgruppe im gleichen Wellenzahlenbereich absorbieren, wie die Diazoniumgruppe (siehe « Spektroskopische Methoden in der organischen Chemie », Georg Thieme Verlag 1984, Seite 53). Es ist daher bei Diazokomponenten und Kupplungskomponenten, die Dreifachbindungen oder entsprechende Substituenten aufweisen, durch Vorversuche abzuklären, ob dennoch die Möglichkeit besteht — je nach Lage der Banden — deren Umsetzung mit Hilfe des vorliegenden Verfahrens zu überwachen. Grundsätzlich ist jedoch die im vorliegenden beschriebene Methode äusserst selektiv und weitgehend störungsunanfällig und erlaubt darüberhinaus die gleichzeitige Erfassung verschiedener Diazoniumsalze, was bei der Diazotierung von Amingemischen von Vorteil ist.

Das erfindungsgemässe Verfahren ist insbesondere auf alle in saurem wässrigem Medium diazotierbaren Amine und durch Azokupplung herstellbaren Azofarbstoffe anwendbar.

Insbesondere ist das erfindungsgemässe Verfahren bei der kontinuierlichen Diazotierung und Kupplung zur Herstellung von Azofarbstoffen anwendbar. Bevorzugt wird das erfindungsgemässe Verfahren als Teil einer on-line-Steuerung eines computer-integrierten, automatisierten Herstellungsverfahrens für Azofarbstoffe angewendet.

Das folgende Beispiel dient der Erläuterung der Erfindung ; Prozente bedeuten Gewichtsprozente.

Beispiel : (Diazotierungsreaktion)

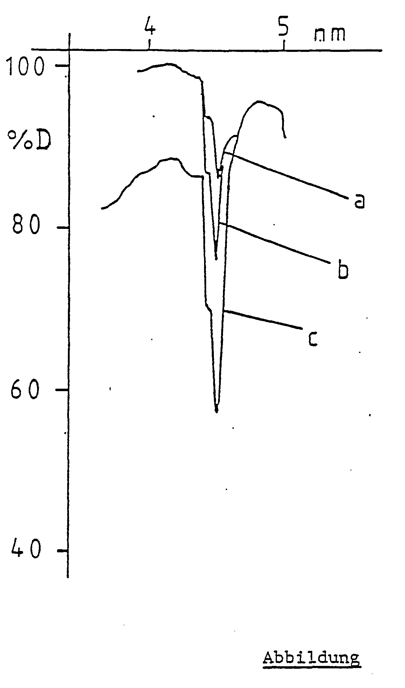

Ein Gemisch aus 4-Aminoacetanilid und Anilin (Molverhältnis 0,45 : 0,55) wird in verdünnter Salzsäure mit 4N wässriger Natriumnitritlösung diazotiert. Die Diazotierung wird bei drei verschiedenen Aminkonzentrationen durchgeführt und zwar bei einer Aminkonzentration von 0,071, 0,142 und 0,284 Mol/l. Nach vollständiger Umsetzung des Amingemisches zu den entsprechenden Diazoniumsalzen, werden die Einzelnen Reaktionsgemische IR-spektroskopisch analysiert. Dazu wird jeweils die N≡N-Valenzschwingung im Wellenlängenbereich von 4 bis 5 nm ($\hat{=}$ einem Wellenzahlenbereich von $\tilde{v} = 2\,000$ bis $2\,500$ cm$^{-1}$) aufgezeichnet. In der Abbildung sind die Absorptionsbanden übereinander aufgetragen. Als Ordinatenmassstab ist die Durchlässigkeit in Prozent (% D) angegeben. Das entspricht dem prozentualen Strahlungsanteil, der von der Probe bei der jeweiligen Wellenlänge durchgelassen wird. Als Bezugswert dient der Vergleichsstrahl. Die Abszisse ist in nm (Wellenlänge λ) kalibriert. Die Bande a) entspricht einer totalen Diazonium-Ionenkonzentration von 0,07, die Bande b) einer Gesamtkonzentration von 0,14 und die Bande c) einer Konzentration beider Diazoniumsalze von insgesamt 0,28 Mol/l, eine quantitative Diazotierung vorausgesetzt. Alle drei Banden haben relativ zum Maximum bei geringfügig kürzerer Wellenlänge eine Schulter, hervorgerufen durch die N≡N-Valenzschwingung des diazotierten Anilins.

Die Banden zeigen deutlich die Konzentrationsabhängigkeit des IR-Signals der N≡N-Valenzschwingung. Bei Diazotierungsreaktionen steuert man über die Intensität des IR-Signals als Regelgrösse die Amin- oder Nitritzufuhr.

Mit der gleichen Methode wird auch die Diazotierungsreaktion der folgenden Amine gesteuert: 2-Chlor-4-nitroanilin, 4-Chlor-2-nitroanilin, 3-Amino-1,2,4-triazol.

## Patentansprüche

1. Verfahren zur Bestimmung und Steuerung der Diazonium-Ionenkonzentration in Diazotierungslösungen und/oder bei der Azokupplung, dadurch gekennzeichnet, dass man die Diazonium-Ionenkonzentration IR-spektroskopisch über die Intensität der N≡N-Valenzschwingung erfasst.

2. Verfahren gemäss Anspruch 1, dadurch gekennzeichnet, dass man die Messung kontinuierlich durchführt.

3. Verfahren gemäss Anspruch 1, dadurch gekennzeichnet, dass man bei Vorliegen einer Suspension vor der Messung eine Filtration durchführt und das Filtrat IR-spektroskopisch analysiert.

4. Verfahren gemäss den Ansprüchen 1 bis 3, dadurch gekennzeichnet, dass man mit dem IRspektroskopischen Messwert als Regelgrösse bei der Diazotierung die Nitrit- oder Aminzufuhr und/oder bei der anschliessenden Azokupplung das Verhältnis von Diazo- zu Kupplungskomponente steuert.

5. Anwendung des Verfahrens nach einem der Ansprüche 1 bis 4 bei der Herstellung von Azo-Farbstoffen.

6. Anwendung des Verfahrens gemäss einem der Ansprüche 1 bis 4 bei der kontinuierlichen Herstellung von Azofarbstoffen.

7. Anwendung des Verfahrens gemäss Anspruch 1 als Teil einer on-line Steuerung eines computer-integrierten, automatisierten Herstellungsverfahrens für Azofarbstoffe.

## Claims

1. A method of determining and controlling the diazonium ion concentration in diazotisation solutions and/or in azo coupling reactions, which comprises determining the diazonium ion concentration by means of IR spectroscopy from the intensity of the N≡N stretching frequency.

2. A method according to claim 1, wherein the measurement is carried out continuously.

3. A method according to claim 1, which comprises filtering the reaction mixture before the measurement if it is in the form of a suspension and analysing the filtrate by IR spectroscopy.

4. A method according to any one of claims 1 to 3, which comprises controlling the addition of nitrite or amine during diazotisation and/or the ratio of diazo component to coupling component during the subsequent azo coupling reaction by using the value obtained by IR spectroscopy as controlled variable.

5. Use of the method according to any one of claims 1 to 4 in the preparation of azo dyes.

6. Use of the method according to any one of claims 1 to 4 in the continuous preparation of azo dyes.

7. Use of the method as claimed in claim 1 as part of an on-line method of controlling a computer-integrated, automated process for the preparation of azo dyes.

## Revendications

1. Procédé de détermination et de réglage de la concentration en ions diazonium des solutions de diazotation et/ou lors de la copulation, caractérisé en ce que l'on détermine la concentration en ions diazonium par spectroscopie IR, par l'intermédiaire de l'intensité de la vibration de valence N≡N.

2. Procédé selon la revendication 1, caractérisé en ce que l'on effectue la mesure en continu.

3. Procédé selon la revendication 1, caractérisé en ce que, dans le cas d'une suspension, on effectue une filtration avant la mesure et analyse le filtrat par spectroscopie IR.

4. Procédé selon les revendications 1 à 3, caractérisé en ce que, à l'aide de la valeur mesurée par spectroscopie IR, prise comme valeur de réglage, on règle l'addition de nitrite ou d'amine lors de la diazotation et/ou on règle le rapport du composant de diazotation au copulant lors de la copulation ultérieure.

5. Utilisation du procédé selon l'une des revendications 1 à 4 lors de la préparation de colorants azoïques.

6. Utilisation du procédé selon l'une des revendications 1 à 4 lors de la préparation en continu des colorants azoïques.

7. Utilisation du procédé selon la revendication 1 comme partie d'une commande en ligne d'un procédé de préparation automatisé de colorants azoïques, à ordinateur intègre.

Abbildung